**Europäisches Patentamt**

**European Patent Office**

**Office européen des brevets**

(19)

(11) Veröffentlichungsnummer: **0 025 497**
**A2**

(12) # EUROPÄISCHE PATENTANMELDUNG

(21) Anmeldenummer: **80104427.2**

(22) Anmeldetag: **28.07.80**

(51) Int. Cl.³: **G 01 D 11/30,** G 01 D 11/24

(30) Priorität: **18.09.79 DE 2937587**

(43) Veröffentlichungstag der Anmeldung: **25.03.81**
**Patentblatt 81/12**

(84) Benannte Vertragsstaaten: **CH FR GB LI**

(71) Anmelder: **Braun Aktiengesellschaft, Rüsselsheimer Strasse 22, D-6000 Frankfurt/Main (DE)**

(72) Erfinder: **Lubs, Dietrich, Heuchelheimer Strasse 147a, D-6380 Bad Homburg (DE)**
Erfinder: **Trölltsch, Karl, Idsteinerstrasse 61, D-6000 Frankfurt / Main (DE)**

(74) Vertreter: **Einsele, Rolf et al, Braun Aktiengesellschaft Postfach 1120 Am Schanzenfeld, D-6242 Kronberg Taunus (DE)**

(54) **Vorrichtung zur Halterung eines meteorologischen Instruments oder eines Messwerks zur Temperatur- oder Zeitmessung.**

(57) Gegenstand der Erfindung ist eine Vorrichtung zur Befestigung eines mit einem Gehäuse (8, 9) verbundenen Anzeigegerätes, insbesondere eines meteorologischen Instruments oder eines Meßwerks zur Temperatur- oder Zeitmessung, an eine Tragewand (14). Die Befestigung soll einerseits so ausgebildet sein, daß das Instrument fest an einer Tragewand (14) anzubringen ist, anderseits eine nachträgliche Veränderung des Instruments in seiner Stellung relativ zur Tragewand (14) ermöglichen. Zu diesem Zweck sind ein Kugelgelenk (10–13) und eine Trägerplatte (15) vorgesehen, wobei die Trägerplatte (15) einerseits und das Gehäuse (8, 9) anderseits über einen Faltenbalg (16) miteinander verbunden sind, der auch das Kugelgelenk (10–13) umschließt.

EP 0 025 497 A2

Vorrichtung zur Halterung eines meteorologischen Instruments oder eines Meßwerks zur Temperatur- oder Zeitmessung


Die Erfindung betrifft eine Vorrichtung zur Halterung eines meteorolgischen Instruments oder eines Meßwerks zur Temperatur- oder Zeitmessung an einer Tragewand.

Es ist allgemein üblich, Uhren oder auch Barometer, Thermometer und Hygrometer mit einer Trägerplatte zu versehen, die es ermöglicht, derartige Instrumente unmittelbar an die Tragewand zu schrauben. Diese bekannte Art der Halterung von Meßgeräten oder Instrumenten hat jedoch den Nachteil, daß sie stets nur in einer einzigen festgelegten Stellung relativ zur Tragewand befestigbar sind; eine nachträgliche Änderung der Stellung des Instruments bzw. der Anzeige des Instruments ist nicht möglich.

Der vorliegenden Erfindung liegt nun die Aufgabe zugrunde, eine Halterung für die vorstehend genannten Instrumente zu schaffen, die es gestattet, das Instrument einerseits fest an einer Tragewand anzubringen, die andererseits jedoch so ausgebildet ist, daß das Instrument, falls erforderlich, nachträglich in seiner Stellung relativ zur Tragewand veränderbar, insbesondere verschwenkbar, ist.

Erfindungsgemäß wird dies dadurch erreicht, daß das Meßwerk, beispielsweise ein Uhrwerk, auf einem vorzugsweise kreisscheibenförmigen, das Display aufweisenden Werkträger angeordnet ist, wobei das Display von einer Kappe aus durchscheinendem Werkstoff abgedeckt und das Meßwerk von einem ein Kalottenlager aufweisenden ein- oder mehrteiligen Gehäuse umfaßt ist, wobei das Kalottenlager den Kugelbock mit Kugel, der Teil einer an der Tragewand befestigten Trägerplatte ist, teilweise umgreift und eine begrenzte Bewegung des Gehäuses relativ zur Trägerplatte gestattet.

Vorzugsweise ist das Kalottenlager mehrteilig ausgebildet, wobei die einzelnen Lagerschalen mit dem Gehäuse über Stellschrauben fest verbunden sind.

Um ein Verstauben des Kalottenlagers zu vermeiden und der Vorrichtung ein gefälliges Aussehen zu geben, sind erfindungsgemäß die an der Tragewand befestigte Trägerplatte einerseits und das Gehäuse andererseits über einen Faltenbalg miteinander verbunden, der auch das Kalottenlager mit Lagerschalen, Kugel und Lagerbock umschließt.

In einer bevorzugten Ausführungsform sind die Enden des Faltenbalgs mit der Trägerplatte einerseits und mit dem Gehäuseteil andererseits durch Verkitten, Vergkleben, Verschrauben verbunden.

Die Erfindung läßt die verschiedensten Ausführungsmöglichkeiten zu. Eine davon ist in der anhängenden Zeichnung schematisch dargestellt, die den Längsschnitt durch eine Vorrichtung zur Halterung einer Uhr an einer Tragewand zeigt.

Die Vorrichtung besteht im wesentlichen aus dem kreisscheibenförmigen, das Display 2 aufweisenden Werkträger 1, dem am Werkträger 1 fest angeordneten Uhrwerk 3, der das Display 2 und die Zeiger 4, 5, 6 abdeckenden Kappe 7, dem aus den Teilen 8, 9 bestehenden Gehäuse, einem mehrteiligen Kalottenlager 1o, 11, welches Teil des Gehäuses 8, 9 ist, dem Kugelbock 12 mit Kugel 13, der an der Tragewand 14 befestigten Trägerplatte 15 und schließlich einem Balgen 16, der zwischen dem Gehäuseteil 9, das mit dem Gehäuseteil 8 über ein Scharnier 17 verbunden ist, und der Trägerplatte 15 angeordnet ist und der den Ringraum 18 staubdicht abdeckt.

Die Trägerplatte 15 ist mit Hilfe von Schrauben 19 an der Tragewand 14 befestigt. Die Schrauben 19 werden dazu durch Öffnungen 2o hindurchgeführt, nachdem das Gehäuseteil 8 zusammen mit dem Uhrwerk 3, dem Werkträger 1 und der Kappe 7 in Pfeilrichtung nach vorne zu abgeklappt sind.

Die Gehäuseteile 8, 9 können selbstverständlich auch immer dann nach vorne in Pfeilrichtung A auseinandergeklappt werden, wenn es notwendig ist, das Uhrwerk 3 über das Stellglied 21 zu regulieren.

Der wesentlichste Vorteil der beschriebenen Vorrichtung besteht darin, daß der Werkträger 1 mit Uhrwerk 3, Display 2, Zeigern 4, 5, 6 und der Kappe 7 um die Kugel 13 allseitig schwenkbar gelagert ist, das heißt, daß der Werkträger 1 nicht notwendigerweise parallel zur Tragewand 14 bzw. zur Trägerplatte 15 stehen muß, vielmehr kann der Werkträger 1 allseitig um etwa $15^{o}$ schräg gestellt werden. Die mit Klemmschrauben 22, 23 am Gehäuseteil 9 befestigten Lagerschalen 1o, 11 sind so eingestellt, daß die Friktion zwischen der Kugel 13 und diesen Lagerschalen ausreichend groß genug ist, um das Gehäuse 8, 9 mit Werkträger 1 und Uhrwerk 3 in jeder geschwenkten Stellung zu halten.

Der Faltenbalg 16 hat den Vorteil, daß er nicht nur dem Uhrengehäuse ein vorteilhaftes Aussehen verleiht, sondern den Zwischenraum 18 und das Innere 24 des Gehäuses gegen Verstauben schützt.

Soll die Friktion zwischen den Lagerschalen 1o, 11 und der Kugel 13 verändert werden, so ist es lediglich notwendig, die Schrauben 22, 23 entsprechend zu lockern bzw. fester anzuziehen.

Auflistung der Einzelteile der Vorrichtung zur Halterung eines Uhrwerks an einer Tragewand

| 1 | Werkträger |
|---|---|
| 2 | Display (Zifferblatt, Skala) |
| 3 | Uhrwerk |
| 4, 5, 6 | Zeiger |
| 7 | Kappe |
| 8, 9 | Gehäuseteile |
| 1o, 11 | Lagerschalen des Kalottenlagers |
| 12 | Kugelbock |
| 13 | Kugel |
| 14 | Tragewand |
| 15 | Trägerplatte |
| 16 | Balgen |
| 17 | Scharnier |
| 18 | Ringraum |
| 19 | Schraube |
| 2o | Gehäuseöffnung |
| 22, 23 | Klemmschrauben |
| 24 | Gehäuseinnere |

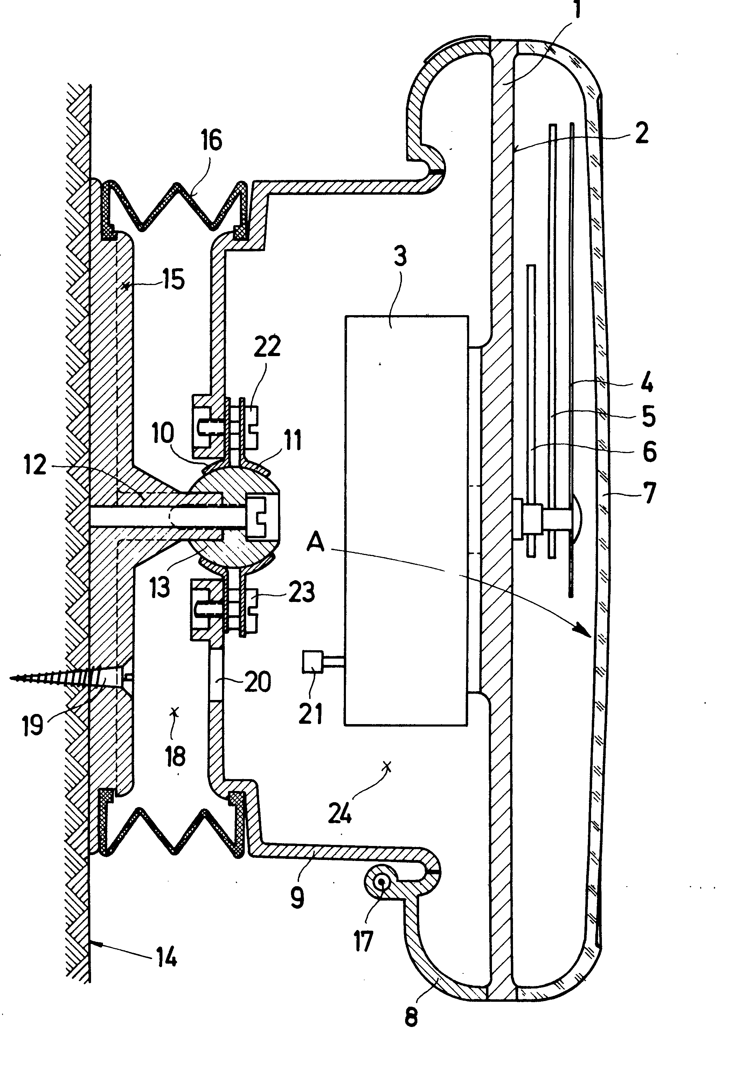

Patentansprüche

1. Vorrichtung zur Halterung eines meteorologischen Instruments oder eines Meßwerks zur Temperatur- oder Zeitmessung an einer Tragewand, d a - d u r c h   g e k e n n z e i c h n e t, daß

a) das Meßwerk, beispielsweise ein Uhrwerk (3), auf einem vorzugsweise kreisscheibenförmigen, das Display (2) aufweisenden Werkträger (1) angeordnet ist, wobei das Display (2) von einer Kappe (7) aus durch-scheinenden Werkstoff abgedeckt und das Meßwerk (3) von einem ein Kalottenlager (1o, 11) aufweisenden ein- oder mehrteiligen Gehäuse (8, 9) umfaßt ist, wobei

b) das Kalottenlager (1o, 11) den Kugelbock (12) mit Kugel (13), der Teil einer an der Tragewand (14) befestigten Trägerplatte (15) ist, teilweise umgreift und eine begrenzte Bewegung des Gehäuses (8, 9) relativ zur Trägerplatte (15) gestattet.

2. Vorrichtung nach Anspruch 1, d a d u r c h   g e k e n n z e i c h n e t, daß das Kalottenlager mehrteilig ausgebildet ist, wobei die einzelnen Lagerschalen (1o, 11) mit dem Gehäuse (8, 9) über Stellschrauben (23, 22) fest verbunden sind.

3. Vorrichtung nach den Ansprüchen 1 und 2, d a d u r c h   g e k e n n - z e i c h n e t, daß die an der Tragewand (14) befestigte Trägerplatte (15) einerseits und das Gehäuse (8, 9) andererseits über einen Faltenbalg (16) miteinander verbunden sind, der auch das Kalottenlager mit Lagerschalen (1o), Kugel (13) und Lagerbock (12) umschließt.

4. Vorrichtung nach Anspruch 3, d a d u r c h   g e k e n n z e i c h n e t, daß die Enden des Faltenbalgs (16) mit der Trägerplatte (15) einerseits und mit dem Gehäuseteil (9) andererseits durch Verkitten, Verkleben, Verschrauben verbunden sind.

...

6. Vorrichtung nach Anspruch 3, d a d u r c h  g e k e n n z e i c h n e t, daß die Enden des Faltenbalgs (16) in Nuten gehalten sind, die an der Trägerplatte (15) bzw. am Gehäuseteil (9) vorgesehen sind.